# EUROPEAN PATENT APPLICATION

(11) **EP 4 838 281 A1**
(43) Date of publication of application: **11.11.2026**
(21) Application number: 25175193.9
(22) Date of filing: 08.05.2025
(51) Int. Cl.: G02B 26/10, H01S 3/10

(54) **SELECTIVE CONTROL SIGNAL INTERPOLATION FOR A LASER SCANNER**

(71) Applicant: Raylase GmbH, 82234 Wessling (DE)
(72) Inventor: Suttner, Fabian, 83646 Wackersberg (DE)
(74) Representative: Araujo Edo, Mario

(57) **Abstract**

The invention refers to a method (100) of processing a control signal for a laser scanner (20) comprising: obtaining (102) a raw control signal and buffering the raw control signal, checking (104) if a second time derivative of the buffered raw control signal exceeds a predetermined threshold, and: if the second time derivative of the buffered raw control signal exceeds the predetermined threshold: providing (106b) a modified control signal by replacing a time portion of the buffered raw control signal containing at least one value of the second time derivative of the buffered raw control signal exceeding the predetermined threshold by an interpolation function ensuring continuity of the buffered raw control signal and of the first time derivative thereof; and outputting (108b) the modified control signal as an output control signal. The invention further refers to a processing unit (10) configured for implementing such method and to a laser device (25) comprising such processing unit (10).

## Description

### FIELD OF THE INVENTION

The present invention is in the field of control signal processing for a laser scanner and relates, in particular, to a method of processing a control signal for a laser scanner implementing corner detection based on a threshold for values of a second time derivative of the control signal and replacement of the control signal by an interpolation function in case of detection events.

### BACKGROUND OF THE INVENTION

Laser scanners, particularly those employing galvanometer-based mechanisms, have become integral in applications requiring rapid and precise positioning. Conventional systems typically consist of a high-dynamic, precision angular position controller (axis controller) and an independent control unit responsible for generating the desired control signals representing target positions of the axis controller. In such systems, the control unit outputs a time series of target positions at high frequencies, possibly of about 100 kHz or more, with a high resolution, for instance, with a range of 2^20 distinct positions.

Due to the nature of these systems, the control signals encoding target positions can exhibit abrupt changes, discontinuities (jumps), or non-differentiable points (kinks or corners). These irregularities can cause significant challenges for the axis controller, as the high time derivatives - particularly the second time derivative (acceleration) and higher time derivatives - may exceed acceptable thresholds and jeopardise the integrity of the system. To mitigate these issues, traditional approaches have relied on methods such as slope limiting and carefully tailoring the controller dynamics. While these measures can reduce the adverse effects of abrupt signal changes, they often come at the cost of decreased system performance. Notably, limiting values of first time derivatives of the control signal implies reducing maximal operational speed and consequently reducing the dynamical abilities of the system.

In cases where the sequence of desired positions is generated such that its third time derivative (jerk) is limited to a low finite value, the axis controller may be capable of processing the signal states (i.e., the signal's derivatives) directly without the need for additional limiting measures, thereby enhancing overall performance. However, achieving such smooth signal profiles typically requires complex trajectory planning algorithms, which may not be feasible in real-time environments. These planning algorithms often require deep system knowledge and tight integration between the control unit and the axis controller, thereby reducing their operational independence. Operational independence poses a problem, for example when a user wishes to acquire the axis controller (for example included in a laser scanner) and the control unit from different providers.

Thus, there is room for technical improvement in the field of control signal processing for laser scanners.

### SUMMARY OF THE INVENTION

The present described addresses these challenges by providing a method that processes a raw control signal for a laser scanner and adapts it, if necessary, to ensure the ability of the laser scanner to execute movements encoded in the control signal without compromising system performance or dynamical abilities. These challenges are solved by a method according to claim 1, by a processing unit according to claim 12, and by a laser scanner according to claim 13. Preferred embodiments of the invention are defined in the appended dependent claims.

A first aspect of the invention refers to a method of processing a control signal for a laser scanner, which may be a computer-implemented method.

A laser scanner, which may also be referred to as a "deflection device" or "deflection unit", may refer herein to any device usable for controllably deflecting a laser beam to a target point in space, in particular to a target point on a work field of a laser processing device, such as an additive manufacturing device, a laser marking device, a laser welding device or the like. Such laser scanner may comprise one or more movable optical components. For example, the laser scanner may comprise a first movable mirror rotatable around a first axis and a second movable mirror rotatable around a second axis perpendicular to the first axis, i.e. a so-called pair of XY movable mirrors. Each of the first and second movable mirrors may comprise a corresponding galvanometer or motor governing a movement of the respective movable mirror as controlled by a corresponding control signal.

The laser scanner may additionally or alternatively comprise one or more movable optical components, for example one or more lenses and/or mirrors. An example of such a lineally movable optical component may be one or more movable lenses lineally shiftable along a given direction configured for focusing the laser beam.

A control signal may refer herein to an electric signal encoding target positions, target angles and/or target speeds to be implemented by the one or more movable devices of the laser scanner, for example by one or more movable mirrors and/or by corresponding galvanometers. For example, a control signal may encode, a sequence of target positions on a work field to which the one or more movable optical components such as mirrors and/or lenses of the laser scanner should deflect one or more laser beams during operation. An electric parameter of the control signal, for example different values of electric current (measurable in amperes), of electric voltage (measurable in volts) and/or of frequency of the control signal may encode corresponding target values of target positions, target angles and/or target speeds to be implemented by the one or more movable devices of the laser scanner.

The control signal may comprise 10.000 to 200.000 values per second, corresponding to a frequency from 10 kHz to 200 kHz.

The method of the invention comprises obtaining a raw control signal and buffering the raw control signal. The raw control signal may be buffered for a given buffering time, resulting in a buffered raw control signal that is time-shifted (delayed) with respect to the raw control signal by the buffering time. The buffering time may be 0,1 ms to 5 ms, preferably 0,5 ms to 1,5 ms.

The raw control signal may refer herein to a non-buffered and non-altered initial version of the control signal. The control signal may be obtained from a control signal generator. The raw control signal may contain cusps, knicks or corners, and/or discontinuities (jumps), i.e. sudden variations at which the raw control signal and/or a first and/or or higher time derivatives thereof may be non-continuous or not well-defined. Accordingly, a second-time derivative of the raw control signal may become very large (in absolute value) at such sudden variations.

The method of the invention may comprise computing the first time derivative and the second time derivative of the buffered raw control signal, in particular within a time-section of the buffered raw control signal corresponding to the buffering time. The first time derivative and the second time derivative of the buffered raw control signal may also be directly obtained if they have previously been computed.

The method of the invention comprises checking if the second time derivative of the buffered raw control signal (or an absolute value thereof) exceeds a predetermined threshold, in particular within the time-section of the buffered raw control signal corresponding to the buffering time.

If that is not the case, i.e., if the second time derivative of the buffered raw control signal does not exceed the predetermined threshold, the buffered raw control signal is output as an output control signal. This is because the fact that the second time derivative of the buffered raw control signal (possibly the absolute value thereof) does not exceed the predetermined threshold is taken as indicative of the absence of any cusps, knicks or corners, and/or discontinuities. In such cases, the previously buffered time-portion of the raw control signal can be forwarded to the laser scanner unaltered, having ensured that it contains so such cusps, knicks or corners, and/or discontinuities at the only price of introducing a slight delay with respect to the raw control signal (the buffering time).

If that is the case, i.e., if the second time derivative of the buffered raw control signal does exceed the predetermined threshold, the raw control signal is not directly outputted as an output control signal. Instead, the method then comprises providing a modified control signal and outputting the modified control signal as an output control signal.

The modified control signal is obtained by replacing a time portion of the buffered raw control signal containing at least one value of the second time derivative of the buffered raw control signal exceeding the predetermined threshold by an interpolation function, wherein the interpolation function ensures continuity of the buffered raw control signal and of the first time derivative thereof.

As a consequence, the time portion of the control signal that might have caused operational problems if forwarded to the laser scanner is replaced by a smooth and/or differentiable function throughout the time portion that ensures that no such operational problems occur when the modified control signal is outputted and possibly forwarded to the laser scanner.

Thus, the method of the invention allows processing a raw control signal for a laser scanner and selectively adapting it, if necessary, to ensure the ability of the laser scanner to execute movements encoded in the control signal without compromising system performance or dynamical abilities. Since only some buffering is required, the method of the invention can be executed synchronously in near-real-time, for example with a constant time shift between the raw control signal and the buffered raw control signal of about 1 ms. Notably, the method can be implemented independently of a specific combination of control unit and laser scanner being used, thereby ensuring operational independence.

For example, the method of the invention is compatible with a control unit implementing jerk-limitation, since control signals with a second derivative below the predefined threshold are simply let through and abnormal control signals with a second derivative exceeding the predefined threshold trigger the interpolation algorithm. Further, the method of the invention does not require complex trajectory planning.

The interpolation of the method of the invention may be or comprise a cubic polynomial interpolation. The interpolation may preferably use a cubic hermite interpolating polynomial. This may imply that, when triggered, interpolation may comprise replacing the time portion of the buffered raw control signal by a cubic polynomial being continuous at the beginning and end of the time portion and having a first time derivative that is also continuous at the beginning and end of the time portion.

The interpolation may however be or comprise a fifth-grade polynomial interpolation. This my imply that, when triggered, interpolation may comprise replacing the time portion of the buffered raw control signal by a fifth-grade polynomial being continuous at the beginning and end of the time portion, having a first time derivative that is also continuous at the beginning and end of the time portion, and having a second time derivative that is also continuous at the beginning and end of the time portion. Possibly, the fifth-grade polynomial may also have a third time derivative that is also continuous at the beginning and end of the time portion.

The buffered raw control signal may be a time series of values containing a number B of values. The number B may be a predetermined number, preferably being at least 50, more preferably at least 100, for example 128 or 256. The number B of buffered values of the control signal may be adapted corresponding to a time-length of the control signal to be buffered and/or to a frequency of the control signal. For example, if the control signal has a frequency 100 kHz and the buffered time-length of the buffered raw control signal should be 1 ms, the number B may be 100.

Such values of the buffered raw control signal, as previously explained, may encode a time-sequence of target positions, target angles and/or target speeds to be implemented by the one or more movable devices of the laser scanner. The values may for example correspond to current intensity or current voltage values of the buffered raw control signal, but may also correspond to otherwise encoded values, for example to values encoded via a duty cycle of the buffered raw control signal or the like.

Said time-portion of the buffered raw control signal that may be replaced by the interpolation function may comprise a number N of values of the buffered raw control signal, with N being equal to or smaller than B, N≤B. Preferably, N may be at least B/4, preferably at least B/3, more preferably at least B/2 and/or at least 30, more preferably at least 50. For example, if B =100, then N may be a number greater than 25, for example 30, or 50, or even 90 or 95. Accordingly the time-portion may correspond to a time lapse of at least 1/4, preferably at least 1/3 of the buffering time. Said time lapse may be referred herein to as "analysis time".

In any case, ensuring continuity of the buffered raw control signal and of the first time derivative thereof may comprise ensuring that, for said time-portion of the buffered raw control signal, for an initial end value X1(t=0) and for a final end value XN(t=tN) delimiting a time-portion (X1,... , XN) of the buffered raw control signal corresponding to a time interval (to, ..., tN) with N values, with N≤B, the following conditions are met:
- The interpolation function f(t) equals the buffered raw control signal, i.e., f(t=0)=X1 and f(t=tN)=XN; and
- the first time derivative of the interpolation function equals the first time derivative of the buffered raw control signal, i.e., f'(t=0)=X1' and f'(t=tN)=XN'.

The initial end value X1 may be an (N/2)-th or (N/2-1)-th-value preceding in time a time value for which the second time derivative of the buffered raw control signal exceeds the predetermined threshold and the final end value may be an (N/2-1)-th or (N/2)-th value following in time said time value for which the second time derivative of the buffered raw control signal exceeds the predetermine threshold. In other words, the time series of N values of the buffered raw control signal may be defined as (X1, ..., XP, ..., XN), with a central value XP at which the buffered raw control signal has a second time derivative exceeding the predetermined threshold, possibly in absolute value.

Thus, if the buffered raw control signal is detected to have a second derivative exceeding the predetermined threshold at a time t=tP, a time sequence of N time values may be defined around the corresponding value XP(t=tP) of the buffered raw control signal, from a first value corresponding to an (N/2)-th value preceding the value XP(t=tP) to a (N/2)-th value following the value XP(t=tP) in the time sequence.

However, this needs not be the case and the value XP, at which the second time derivative of the buffered raw control signal exceeds the predetermined threshold, may be in a non-central position of the time series of N values.

Performing said interpolation may further comprise ensuring continuity of the second time derivative of the buffered raw control signal. Preferably, this may comprise ensuring that, for the initial end value X1 and for the final end value XN delimiting said portion of the buffered raw control signal, the second time derivative of the interpolation function f(t) equals the second time derivative of the buffered raw control signal, i.e. , f'(t=0)=X1" and f"(t=tN)=XN".

Even through analytical expressions may be used herein for the interpolation function f(t) and its derivatives, f'(t) representing a first time derivative and f"(t) representing a second time derivative, and for the buffered raw control signal X(t) and its derivatives, X'(t) representing a first time derivative and X"(t) representing a second time derivative, the skilled person will understand that, in practice, these functions may correspond to a numerical vector of sequence of values. Accordingly, any derivatives mentioned herein may be computed via corresponding numerical techniques known to the skilled person.

In some embodiments, the number N may be a fixed predetermined number.

In other embodiments, the number N may be a variable number. In such cases, the method of the invention may further comprise determining N as a function of the buffered raw control signal, preferably of the first time derivative of the buffered raw control signal. For example, the number N may be computed, for each interpolation process, as a function of the first time derivative of the buffered raw control signal, possibly at the initial end value X1(t=0) or at any earlier value of the B values of the buffered raw control signal. For example, the number N may be determined as a linear function of said first time derivative of the buffered raw control signal at the initial end value X1(t=0) or at any said earlier value of the values of the buffered raw control signal, e.g.: $N = A ⋅ X 1 ′ + {N}_{O}$ with A possibly being a pre-determined slope, X1' being aid first time derivative of the buffered raw control signal, for example at the initial end value X1(t=0) or at any said earlier value of the values of the buffered raw control signal, and No being a constant representing a minimal possible value of N, for example N₀=10 or N₀=30.

Alternatively, in embodiments in which a plurality of raw control signals may be simultaneously obtained and processed, it may be possible to directly obtain X1' from a raw control signal corresponding to velocity, possibly without requiring any dedicated derivative computation. For example, this may be the case in some embodiments, if three raw control signals may be obtained in parallel and/or simultaneously, one of them corresponding to a time sequence of target positions, one of them corresponding to a time sequence of target velocities and one of them corresponding to a time sequence of target accelerations. Such configurations may allow saving computations resources and time and increasing robustness and accuracy.

The slope A, which may correspond to a sensibility of the dynamic adaptation of the number N may be pre-determined corresponding to a target ratio N/V of the number N over a target speed V.

According to other embodiments, N may be variably determined using a possibly non-linear lookup table or a higher-order function.

The present inventor found out that such adjustment of N may reduce the overall processing time.

In some embodiments, the method of the invention, in particular the buffering of the raw control signal, may comprise buffering at least three different copies of the raw control signal, with each of the copies reproducing the raw control signal with a different buffering delay with respect to the raw control signal. As previously explained, the buffered control signal is delayed with respect to the raw control signal by a buffering time, BT. This buffered control signal may correspond to the first one of the at least three different copies. A further (second) copy of the raw signal may be delayed with respect to the raw control signal by the buffering time minus the analysis time. A further (third) copy of the raw signal may be delayed with respect to the raw control signal by the buffering time minus a portion of the analysis time. Such portion of the analysis time can for example be ¼, 1/3 or 1/2 of the analysis time. For example, in cases in which the second time derivative of the buffered raw control signal exceeds the predetermined threshold is to be in a central position of the time series of N values, the further (third) copy of the raw signal may be delayed with respect to the raw control signal by the buffering time minus half the analysis time.

The method may further comprise buffering the at least three different copies of the raw control signal, first time derivatives thereof and possibly higher time derivatives thereof, for example second time derivatives and, if needed, third time derivatives.

In other embodiments, the method of the invention, in particular the buffering of the raw control signal, may comprise buffering at least three different copies of the raw control signal, with a first one of the copies corresponding to a raw control signal corresponding to a time sequence of target positions, a second one of the copies corresponding to a time sequence of first derivatives (i.e. target velocities) computed from the first copy, and a third one of the copies corresponding to a time sequence of second derivatives (i.e. target accelerations) computed from the first copy (and possibly from the second copy). In such embodiments, the method of the invention may comprise computing the second and third copies from the first copy directly after the step of obtaining (and possibly buffering) the raw control signal. The required additional computation time may allow a more rapid reaction during operation, since no additional computations are required for computing derivatives of the raw control signal. Instead they may be directly obtained from the second and/or third copies.

Using such at least three different copies of the raw control signal, with different buffering delays, may allow simultaneously analysing non-simultaneous time events along the time-line of the raw control signal based on the buffered control signal and reacting thereto in a synchronous manner. For example, the third copy may be used for detecting when the second time derivative of the buffered raw control signal exceeds the predetermined threshold. If this is the case, i.e. when a detection event is triggered, values of the interpolation function and any derivatives thereof at the initial end value of the time-portion of the buffered raw control signal can be obtained from the first copy, which directly corresponds (with zero delay) to the buffered control signal, while values of the interpolation function and any derivatives thereof at the final end value of the time-portion of the buffered raw control signal can be obtained from the second copy, which has a delay with respect to the buffered control signal equal to the analysis time.

A further aspect of the invention refers to a processing unit configured to implement the method according to any of the previously described embodiments of the first aspect of the invention. The processing unit may be integrated in a control unit for a laser scanner and/or in a laser scanner.

The processing unit according to the invention may be hardware-implemented and/or software-implemented. For example, the processing unit may be a dedicated processing unit and/or a dedicated module within a processing unit, such as a CPU, a control card or the like. As a further example, the processing unit may be a piece of software implementable on such a control card or on a general-purpose computer.

A further aspect of the invention refers to a laser device comprising a processing unit configured to implement the method according to any of the previously described embodiments of the first aspect of the invention and a laser scanner connected thereto.

A further aspect of the invention refers to a computer-readable storage storing executable instructions which, when executed by a processing unit, cause the processing unit to implement the method according to any of the previously described embodiments of the first aspect of the invention.

### BRIEF DESCRIPTION OF THE DRAWINGS

Fig. 1 shows a schematic view of a processing unit according to the invention.
Fig. 2 shows a schematic view of the processing unit of Fig. 1, when integrated in a laser scanner.
Fig. 3 shows a schematic view of the processing unit of Fig. 1, when integrated in a control unit for a laser scanner.
Fig. 4 shows a schematic flow diagram of a method of processing a control signal for a laser scanner according to the invention.
Fig. 5 illustrates a raw control signal, a buffered raw control signal and an interpolation function as used in a method of processing a control signal for a laser scanner according to the invention.
Fig. 6 illustrates a raw control signal, three mutually delayed copies of the buffered raw control signal and an interpolation function as used in a method of processing a control signal for a laser scanner according to the invention.
Fig. 7 illustrates compares a buffered raw control signal to a modified control signal provided by a method of processing a control signal for a laser scanner according to the invention.
Fig. 8 illustrates the result of applying the method of the invention to a raw control signal with no corners, cusps or discontinuities.
Fig. 9 illustrates the result of applying the method of the invention to a raw control signal with corners.

### DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

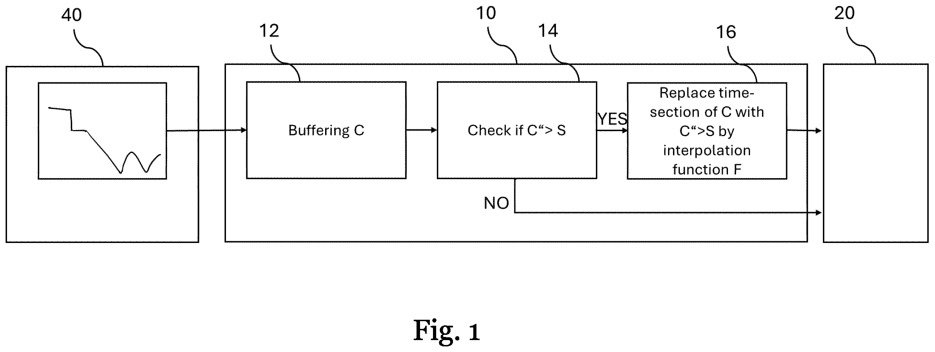

The same reference signs are used in Figs. 1-8 for indicating the same elements.

Fig. 1 to 3 show schematic views of a processing unit 10 according to embodiments of the present invention. The processing unit 10 may be provided as a piece of hardware, for example in the form of a physical device, or may be provided as a piece of software executable by a corresponding processing device, such as a control card or control module for a laser scanner or a computer.

The processing unit 10 is connected to a laser scanner 20, which may be configured for scanning a laser beam. The laser scanner can comprise one or more movable mirrors for deflecting the laser beam and one or more corresponding motors, for example galvanometers, for driving a controlled movement of the one or more movable mirrors.

The processing unit 10 is further connected to a signal generator 40. The signal generator 40 is configured for generating raw control signals for controlling the laser scanner. The raw control signals generated by the signal generator 40 encode time sequences of target positions, target velocities and/or target accelerations for governing operation of the laser scanner 20, in particular of movable components thereof, such as the previously mentioned one or more movable mirrors and/or the one or more corresponding galvanometers. The raw control signals are transmitted from the signal generator 40 to the laser scanner 20 through the processing unit 20. The processing unit 20 is connected between the signal generator 40 and the laser scanner 20 to process the raw control signals before the raw control signals reach the laser scanner 20.

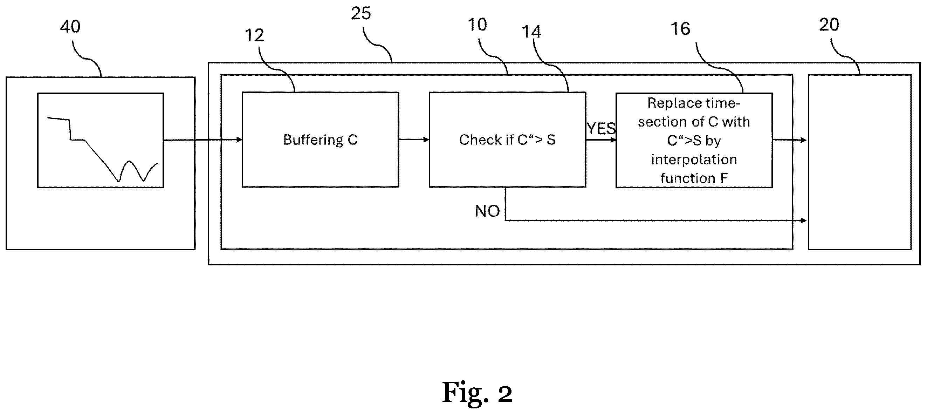

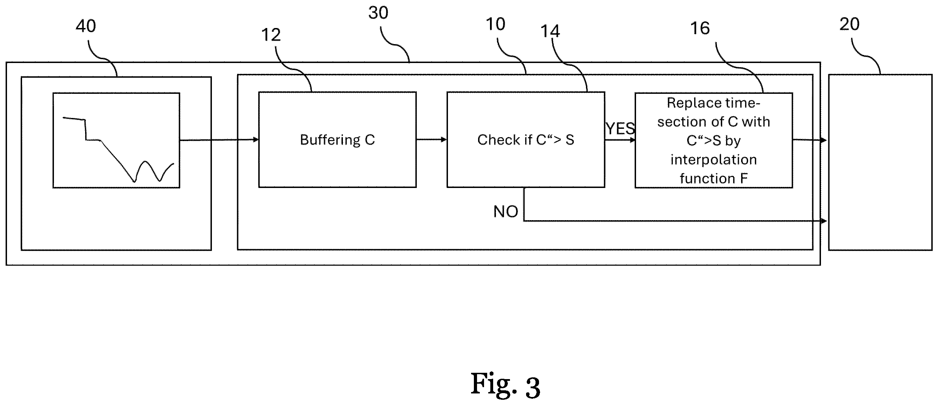

In the exemplary embodiment of Fig. 1, the signal generator 40, the processing unit 10 and the laser scanner 20 are provided as separate and structurally independent devices that can be connected to each other. However, in other related embodiments, any combination of the signal generator 40, the processing unit 10 and the laser scanner 20 can be integrated in one single device. Fig. 2 illustrates an exemplary embodiment in which the processing unit 10 and the laser scanner 20 are integrated in one device, being components of a laser device 25 that comprises the laser scanner 20 and the processing unit 10 and is connected with the signal generator 40. Fig. 3 illustrates an exemplary embodiment in which the processing unit 10 and the signal generator 40 are integrated in one device, being components of a control unit 30 that comprises the signal generator 40 and the processing unit 10.

In other related embodiments, the signal generator 40, the processing unit 10 and the laser scanner 20 can be components of one single integrated device (not shown).

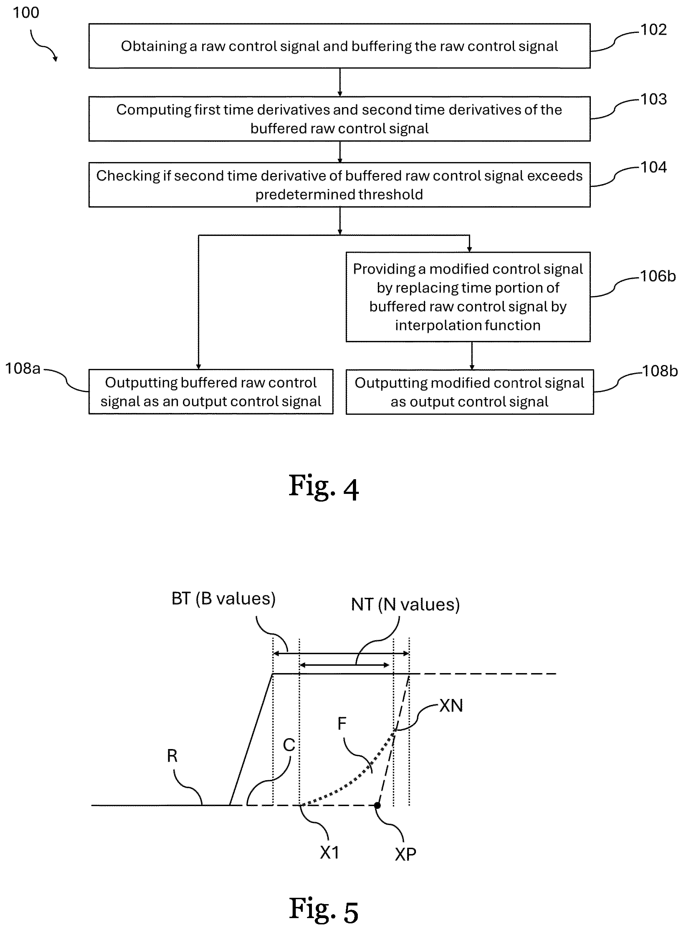

The raw control signals generated by the signal generator 40 can include corners, cusps or discontinuities, which could cause efficiency loss and/or malfunction if implemented by the laser scanner 30 without any pre-processing. To avoid this, the processing unit 10 implements the method 100 illustrated in Fig. 4 to pre-process the raw control signals before they are implemented by the laser scanner 20.

In step 102 of method 100, the processing unit 10 obtains and buffers a raw control signal from the signal generator 40. The processing unit 10 comprises a buffering module 12 configured for carrying out step 102.

The buffered raw control signal can comprise a number B of values corresponding to a given time-extension of the raw control signal to be buffered. For example, if the raw control signal has a frequency of 100 kHz, i.e. is a time series of values containing 100.000 values per second, and the buffering time is 1 ms, the number B is then B=100.

In optional step 103, which can be implemented by the buffering module 12 or by an optional dedicated module (not-shown) of the processing unit 10, first and second time derivatives of the buffered raw control signals are computed, for example by means of appropriate numerical techniques. The first and second time derivatives of the buffered raw control signal can be computed at each of the B values.

In step 104, performed by a checking module 14, the method 100 comprises checking if the second time derivative of the buffered raw control signal exceeds a predetermined threshold S at any of the buffered B values. The predetermined threshold S can be chosen by a developer to meet the requirements of a specific use.

If the check in step 104 reveals that the second time derivative of the buffered raw control signal does not exceed the predetermined threshold S, the buffered raw control signal is outputted to the laser scanner 20, at 108a, as an output control signal to be implemented by the laser scanner 20, since it is now known that the buffered portion of the buffered raw control signal being forwarded to the laser scanner 20 is free of any corners, cusps or discontinuities. The buffered raw control signal can be forwarded to the laser scanner 20 by the checking module 14.

If, instead, the check in step 104 reveals that the second time derivative of the buffered raw control signal does exceed the predetermined threshold S, method 100 proceeds to steps 106b and 108b, which are implemented by an interpolation module 16 of the processing unit 10.

In step 106b, a modified control signal is provided by replacing a time portion of the buffered raw control signal by an interpolation function. The time portion being replaced is a time portion of the buffered raw control signal containing a value of the second time derivative of the buffered raw control signal that exceeds the predetermined threshold, which was detected in step 104.

A time portion of the buffered raw control signal selected for being replaced by the interpolation function can comprise a number N out of the B buffered values of the buffered raw control signal, with N being equal to or smaller than B. Preferably, N can be at least between B/4, more preferably at least B/3. For example, if B=100, N can be 30 or more, 50 or more or even 90 or more, for instance 95.

In some embodiments, the number N can be a constant predetermined number, such that the same value of the number N is used for all occasions in which step 106b is carried out. In other embodiments, the number N can be variable, which can possibly be determined once or each time step 106b is carried out or for example each time step 106b is carried out after step 108a has been carried out . The number N can be determined as a function of the buffered raw control signal, in particular of the first time derivative thereof. For example, the number N can be determined as a linear function of the first time derivative of the buffered raw control signal at the initial end value X1(t=0), e.g.: $N = A ⋅ X 1 ′ + {N}_{O}$ with A being a pre-determined slope, X1' being said first time derivative of the buffered raw control signal, for example at the initial end value X1(t=0), and N₀ being a constant representing a minimal possible value of N, for example N₀=30.

The N values of can be chosen out of the B buffered values of the buffered raw control signal such that they cover a time portion of the buffered raw control signal around a value XP out of the B values of the buffered raw control signal at which the second time derivative has been detected at 104 to exceed the predefined threshold S. The time portion can be chosen such that the value XP is in a middle section thereof and/or is a central value thereof. Thus, the time portion can cover N values out of the B values between an initial end value and a final end value, with the initial end value possibly being the (N/2)-th value preceding value XP and the final end value possibly being the (N/2)-th value following value XP. If, for example, N=30, the initial end value can be a 14^{th} or 15^{th} value preceding XP and the final end value can be a 15^{th} or 14^{th} value, respectively, following XP.

In any case, the time portion of the buffered raw control signal represented by the N selected values is replaced by an interpolation function, which can for example be a cubic polynomial, preferably a piecewise cubic hermite interpolating polynomial, or a fifth-grade polynomial.

A set of boundary conditions is imposed upon the interpolation function to ensure that the modified control signal comprising the non-replaced part of the buffered raw control signal, with B-N values, and the replaced part of the buffered raw control signal, with N values, is a continuous function with continuous first time derivative throughout the B values. In particular, the following boundary conditions are imposed upon the interpolation function f:
- The interpolation function equals the buffered raw control signal at the initial end value and at the final end value; and
- The first time derivative of the interpolation function equals the first time derivative of the buffered raw control signal at the initial end value and the final end value.

In particular when the interpolation function is a fifth-grade polynomial function, the following two additional boundary conditions can be imposed upon the interpolation function:
- The second time derivative of the interpolation function equals the second time derivative of the buffered raw control signal at the initial end value and the final end value.

Fig. 5 illustrates a raw control signal R (solid line) and the corresponding buffered raw control signal C (dashed line), which is delayed with respect to the raw control signal R by a buffering time BT, comprising a number B values. The buffered raw control signal C comprises one value

XP at which the buffered raw control signal C has a corner, implying a discontinuity of the first time derivative of the buffered raw control signal C and hence an ill-defined second time derivative, which, numerically, will exceed a predetermine threshold S.

The value XP is identified in step 104 of method 100 and a subset of N values (X1, ..., XP, ..., XN) out of the B buffered values of the buffered raw control signal C is selected around XP and replaced by interpolation function F, which can be a piecewise cubic hermite interpolating polynomial satisfying:
- $F \left(X1\right) = C \left(X1\right) ,$
- $F \left(XN\right) = C \left(XN\right) ,$
- $F ′ \left(X1\right) = C ′ \left(X1\right) ,$and
- $F ′ \left(XN\right) = C ′ \left(XN\right) ,$
wherein F' denotes first time derivatives of the interpolation function F and C' denotes first time derivatives of the buffered raw control signal C. If a fifth-grade polynomial is used as the interpolation function F, also F"(X1)=C"(X1) and F"(XN)=C"(XN) can be imposed.

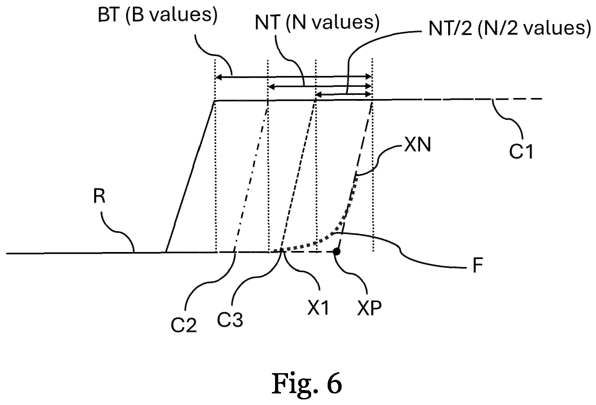

Fig. 6 illustrates the use of three differently-buffered copies C1, C2 and C3 of the raw control signal R for implementing the method of the invention according to some embodiments. Each of the copies C1, C2 and C3 reproduces the raw control signal R with a different buffering delay with respect to the raw control signal R. The buffered control signal corresponds to the first copy C1, which is delayed with respect to the raw control signal R by the buffering time, BT. The second copy C2 of the raw signal is delayed with respect to the raw control signal R by the buffering time BT minus the analysis time NT. The third copy C3 of the raw signal is delayed with respect to the raw control signal R by the buffering time BT minus a portion of the analysis time NT, for example by BT-NT/2, as illustrated in Fig. 6, corresponding to an exemplary situation in which the second time derivative of the buffered raw control signal R exceeds the predetermined threshold in a central position of the time series of N values.

In embodiments as illustrated in Fig. 6, the method of the invention comprises buffering the copies C1, C2 and C3 of the raw control signal R,First time derivatives thereof and possibly higher time derivatives thereof, for example second time derivatives and, if needed, third time derivatives thereof, may be computed from the copies C1, C2 and C3 when needed. Alternatively, the copies C1, C2 and C3 may respectively correspond to a time sequence of target positions, a time sequence of target speeds and a time sequence of target accelerations, wherein the second and third copies, C2 and C3 may be computed in an initial method step from the first copy by computing first time derivatives and second time derivatives, respectively, over the entire buffering time.

Using the copies C1, C2 and C3 and, if needed, the derivatives thereof, allows simultaneously analysing non-simultaneous time events along the time-line of the raw control signal R in a synchronous manner. For example, the third copy C3 can be used for detecting when the second time derivative of the buffered raw control signal exceeds the predetermined threshold. If this is the case, i.e. when a detection event is triggered based on C3, values of the interpolation function and any derivatives thereof at the initial end value of the time-portion of the buffered raw control signal can be obtained from the first copy C1, which directly corresponds (with zero delay) to the buffered control signal, while values of the interpolation function and any derivatives thereof at the final end value of the time-portion of the buffered raw control signal can be obtained from the second copy C2, which has a delay with respect to the buffered control signal (with respect to C1) equal to the analysis time NT.

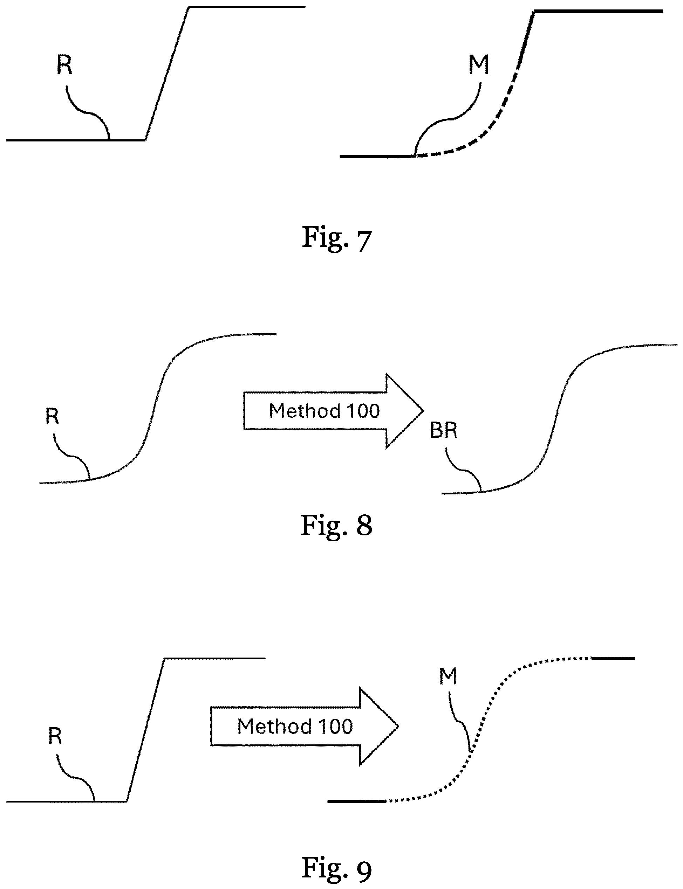

As shown in Fig. 7, modified control signal M results from step 106b, which is forwarded to the laser scanner 20, in step 108b, instead of the raw control signal R. The modified control signal M does not present any corner at XP, since the time section thereof around value XP has been replaced by a smooth interpolation function. In subsequent repetitions of the method 100, which can be cyclically repeated for subsequent time section of the raw control signal R, other corners, cusps or discontinuities present in the raw control signal R can be removed.

As illustrated in Fig. 8, if the processing unit 10 receives a raw control signal R free from corners, cusps or discontinuities, method 100 proceeds through step 108a and simply forwards a buffered but otherwise unmodified version BR of the raw control signal R to the laser scanner 20.

As illustrated in Fig. 9, if the processing unit 10 receives a raw control signal R with a corner, cusp or discontinuity, method 100 proceeds through steps 106b and 108b and forwards the modified control signal M to the laser scanner 20.

As a result of the method 100, it is ensured that the control signals received by the laser scanner 20 are free from corners, cusps or discontinuities. Further, method 100 ensures efficiency by initiating steps 106b and 108b when required, while proceeding through step 108a when no replacement and interpolation is required.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A method (100) of processing a control signal for a laser scanner (20), the method comprising:
obtaining (102) a raw control signal and buffering the raw control signal,
checking (104) if a second time derivative of the buffered raw control signal exceeds a predetermined threshold, and:
if the second time derivative of the buffered raw control signal exceeds the predetermined threshold:
providing (106b) a modified control signal by replacing a time portion of the buffered raw control signal containing at least one value of the second time derivative of the buffered raw control signal exceeding the predetermined threshold by an interpolation function ensuring continuity of the buffered raw control signal and of the first time derivative thereof; and
outputting (108b) the modified control signal as an output control signal; and
if the second time derivative of the buffered raw control signal does not exceed the predetermined threshold, outputting (108a) the buffered raw control signal as an output control signal.

2. The method of claim 1, wherein performing said interpolation comprises performing a cubic polynomial interpolation, preferably using a piecewise cubic hermite interpolating polynomial.

3. The method of claim 1 or 2, wherein performing said interpolation comprises performing a fifth-grade polynomial interpolation.

4. The method of any of the preceding claims, wherein the buffered raw control signal is a time series of B values, wherein said time-portion of the buffered raw control signal comprises a number N of values of the buffered raw control signal, with N being equal to or smaller than B, wherein ensuring continuity of the buffered raw control signal and of the first time derivative thereof comprises ensuring that, for an initial end value and for a final end value delimiting said time portion of the buffered raw control signal:
- the interpolation function equals the buffered raw control signal; and
- the first time derivative of the interpolation function equals the first time derivative of the buffered raw control signal.

5. The method of claim 4, wherein performing said interpolation further comprises ensuring continuity of the second time derivative of the buffered raw control signal, preferably comprising ensuring that, for the first end value and for the second end value delimiting said time portion of the buffered raw control signal:
the second time derivative of the interpolation function equals the second time derivative of the buffered raw control signal.

6. The method of claim 4 or 5, wherein the initial end value is an (N/2)-th or (N/2-1)-th value preceding in time a time value for which the second time derivative of the buffered raw control signal exceeds the predetermine threshold; and/or
wherein the final end value is an (N/2-1)-th or (N/2)-th value following in time said time value for which the second time derivative of the buffered raw control signal exceeds the predetermine threshold.

7. The method of any of the preceding claims, wherein a time section of the buffered raw control signal during the buffering time comprises a predetermined number B of values, B preferably being at least 50, more preferably at least 100.

8. The method of any of any of the preceding claims, wherein said time portion of the buffered raw control signal comprises a constant number N of values of the buffered raw control signal, N being a fixed predetermined number.

9. The method of any of the preceding claims, wherein the method further comprises determining N as a function of the buffered raw control signal, preferably as a function of the first time derivative thereof.

10. The method of claim 7 or 8, wherein N is preferably at least 30, preferably at least 50; and/or wherein N is preferably at least B/4, more preferably at least B/3, B being a number of values of the buffered raw control signal in a time section thereof corresponding to the buffering time.

11. The method of any of the preceding claims, wherein the raw control signal is a time series of values, each value corresponding to a target position, a target angle and/or a target speed for a movable component of the laser scanner, wherein the movable component preferably is a movable mirror and/or a motor of a movable mirror.

12. The method of any of the preceding claims, wherein the buffering time is 0,1 ms to 5 ms, preferably 0,5 ms to 1,5 ms; and/or wherein the control signal comprises 10.000 to 200.000 values per second.

13. A processing unit (10) configured for implementing the method of any of the preceding claims, wherein the processing unit (10) is preferably integrated in a control unit (30) for a laser scanner (20) or in a laser device (25) comprising a laser scanner (20) and/or connected thereto.

14. A laser device (25) comprising a processing unit (10) configured to implement the method of any of claims 1 to 12 and a laser scanner (20) connected thereto.

15. A computer-readable storage medium storing executable instructions which, when executed by a processing unit, cause the processing unit to implement the method of any of claims 1 to 12.
